# EUROPEAN PATENT APPLICATION

(11) **EP 4 345 714 A1**
(43) Date of publication of application: **03.04.2024**
(21) Application number: 23200104.0
(22) Date of filing: 27.09.2023
(51) Int. Cl.: G06Q 10/08, G06Q 10/04, G06Q 10/10, A47G 29/14

(54) **GOODS SHIPPING AND RECEIVING MANAGEMENT SYSTEM**

(30) Priority: 28.09.2022 IT 202200019890
(71) Applicant: Maresca, Andrea Carlo, 00167 Roma (IT); Benvenuto, Marco, 00167 Roma (IT)
(72) Inventor: Maresca, Andrea Carlo, 00167 Roma (IT); Benvenuto, Marco, 00167 Roma (IT)
(74) Representative: Praxi Intellectual Property Milano

(57) **Abstract**

A system (500) for managing the shipping and receiving of goods is described, comprising: a management computer (501) for managing activities relating to the shipping and receiving of goods; a first container (502) and a second container each (502) defining a relative internal compartment and configured to allow the insertion, storage and withdrawal of goods into/from the relative internal compartment; a first communication device (545) internal to the first container (502) and configured to communicate with the management computer (501); a second communication device (545) internal to the second container and configured to communicate with the management computer (501); electrical cables (C1; C2) arranged in said containers (502) and configured to provide data and a supply voltage. The first container (502) and the second container are respectively provided with a first connector (9; 540) and a second connector (12, 541) mechanically and electrically coupled to each other so as to mechanically attach the first container (502) to the second container (502) and connect said electrical cables (C1, C2) to establish a connection for the electrical supply voltage and for data transmission.

## Description

### TECHNICAL FIELD OF THE INVENTION

The present invention relates to systems for managing the shipping and receiving of goods

### STATE OF THE ART

The percentage of the world's population living in metropolises is steadily rising; it will be more than 60 percent within the next 20 years. The phenomenon of population aggregation in concentrated areas involves the resolution of issues such as: vehicle and goods traffic resulting in road congestion, waste, pollution, and energy consumption.

For some time now, we have been talking in an extended sense of Smart City, which we can translate as easy/intelligent city, i.e., cities where services of various kinds are implemented to improve the efficiency of cities: less traffic, maximization of sorted waste collection, optimization of goods delivery, reduction of energy consumption, etc.

The development of online sales has led to a dramatic increase in the shipment of goods in recent years, especially small and medium-sized goods. Therefore, it has become necessary to find methods to facilitate the act of goods pick-up and delivery.

The use of containers as collection and delivery points for goods is becoming the most widely used method for the purpose.

Some documents describing systems for the management of delivery and/or pickup of goods and/or objects and/or materials based on the use of containers and/or groups of containers acting as pickup and/or collection points are: US2015/0186840 A1, US2019/0102962A1, US2020/0193373A1, EP 3 336 458 A1, WO 2009/148388 A1, US 2012/0062362 A1

### SUMMARY OF THE INVENTION

The present invention addresses the problem of proposing a system for shipping and receiving goods, based on the use of groups of containers, that provides adequate flexibility in configuring the characteristics of each a group to suit the specific needs of users.

The technical problem defined above is solved by a system as described by independent claim 1 and its preferred forms of embodiments as defined by dependent claims 2-14.

### Definitions

Vocabulary and/or locutions are used in this description, the meaning of which is defined below.

*Closed system*: means a system, in which at least one of the following conditions occurs:
- there is a single entity that has ownership of the container groups and/or the power to decide where to place them and/or what rates to charge;
- there is a single entity that can use the container groups for the purpose of having goods delivered and/or picked up;
- there is a single entity that is empowered as a courier to place and/or retrieve goods from the containers;
- the container is operated by the owner or the person who has exclusive use of it, as he/she is the only one who can open the container or communicate an opening code. In this case, owner does not necessarily mean a single entity, but also several entities that share among them the exclusive management of the container;
- the user cannot access the functionality of the system from his or her own software platform, for example by loading specific plug-ins/libraries made available by the system.

*Open system*: means a system, in which one or more, even all, of the conditions below can occur:
- multiple owners of container groups and each owner has full authority in deciding how many groups to install in the territory, which and how many containers each group consists of (groups can have different configurations among themselves), the locations where to install the groups, the hourly rates of use, and the hours of use;
- multiple users (sellers, shippers, consignees, buyers) who can make use of the container group system in order to have goods delivered and/or picked up;
- multiple users (couriers) who can make use of the system to deliver and/or pick up goods of shipments they handle;
- users have full freedom in choosing the container to be reserved for delivery and/or shipment of goods, which can then compare usage rates;
- users have full freedom in choosing the courier for delivery and/or shipment of goods, which can thus compare costs and rates;
- it is possible to deliver directly from the Seller to the Buyer or from the Sender to the Recipient without the intervention of the courier, some examples: a supermarket that places goods purchased online by customers inside its containers, customers pick up the goods from the containers themselves; a medicine delivery service to Pharmacies, the Pharmacy equipped with containers receives the medicines ordered from the central warehouse; a Bar delivery service of milk, croissants etc. directly from the manufacturers;
- users can access the functionality of the system from their own software platform, such as by uploading specific plug-ins/libraries made available by the system.

*Exclusive mode:* means that the container and/or group of containers can be used only by the owner to have goods delivered and/or shipped. A typical example would be a container, or group of containers, installed by an owner at his or her home that he or she intends to use for his or her own personal use.

*Restricted mode:* means that the container and/or group of containers can be used only by a set of users identified by the system as the only ones authorized to make use of that container/group of containers to have goods delivered and/or sent. A typical example might be a group of containers installed at an apartment building; only the residents of that apartment building are authorized to make use of the group of containers without any of them necessarily having to be the owner. Another example might be a container used to receive mail (mailbox); in this case, the set of authorized users consists of a single entity.

*Public mode:* means that such container and/or group of containers is available to all users registered in the system.

*Recipient*: means the entity or, more generally, the place where the goods are to be delivered.

*Buyer*: means the entity that makes the purchase.

*Seller*: means the entity that sells the goods.

*Shipper*: shall mean the entity that is to send goods to any recipient.

*Courier*: shall mean the entity that transfers the goods from the shipper and/or seller to the buyer and/or consignee

*User*: means the entity that uses some or all of the functionality made available by the system. Some examples of users are: consignees, buyers, sellers, senders, couriers.

*Container*: means an object with the main function of allowing the insertion, storage and withdrawal of things inside it, it can have several possible shapes, and be made by means of, one or more parts assembled together, of various possible materials,

*API.* refers to a set of object classes, objects, functions, procedures and data structures, which can be loaded and executed within a stand-alone application or executable by web browser or interpreter. Loading the API within the application, makes it possible for the application to access and use the various features of the patented system.

*Application:* means a software program executable stand alone or within a web browser or by interpreter and capable of loading and using APIs provided by third parties.

*Datetime:* means data consisting of the following fields: year, month, day, hour, minutes, seconds, thousandths of a second. A datetime is thus able to describe a time reference in absolute form and with an accuracy down to one thousandth of a second.

*Click and collect*: is a purchasing mode, in which the buyer buys online and then later goes to pick up the goods.

### BRIEF DESCRIPTION OF THE FIGURES

The present invention is hereinafter described in detail, by way of example and not limitation, with reference to the attached drawings, in which:
- figure 1 shows schematically the architecture of a system for managing the shipping and receiving of goods;
- figure 2 schematically shows a first example of a container that can be employed in said system;
- figure 3 shows a second example of a container with a horizontal separating septum;
- figure 4 shows a third example of a container with a vertical separating septum;
- figure 5 shows an example of a vertical separating septum handling device;
- figure 6 refers to a form of implementation in which is horizontal separator septum is of the gate type;
- figure 7 shows a particular form of implementation of said gate separator septum;
- figure 8 schematically shows an example of a communication and control device, capable of communicating with servers in the system, sending commands to one or more containers, and receiving responses to commands from one or more containers in the system;
- figure 9 shows an example of three-wire connectors with which the system container is equipped;
- figure 10 shows schematically an example of a four-wire male connector employable in said container;
- figure 11 shows schematically an example of a four-wire female connector employable in said connector;
- figure 12 shows a mode of engagement between said female and male connectors;
- figure 13 and figure 14 schematically show examples of possible container assembly installations (the fan symbol stands for an container with internal temperature setting and control capabilities);
- figure 15 shows a mode of electrical connection between communication devices associated with containers in the same group;
- figure 16 refers to an example of a container and shows, among other things, an electromagnetic lock and a sensor of the open and closed status of a container door placed inside the door hinge
- figure 17 refers to different ways of accessing rooms that house a group of containers;
- figure 18 refers to a container equipped with a Peltier cell thermoelectric device.

### DETAILED DESCRIPTION

### Example of a management system

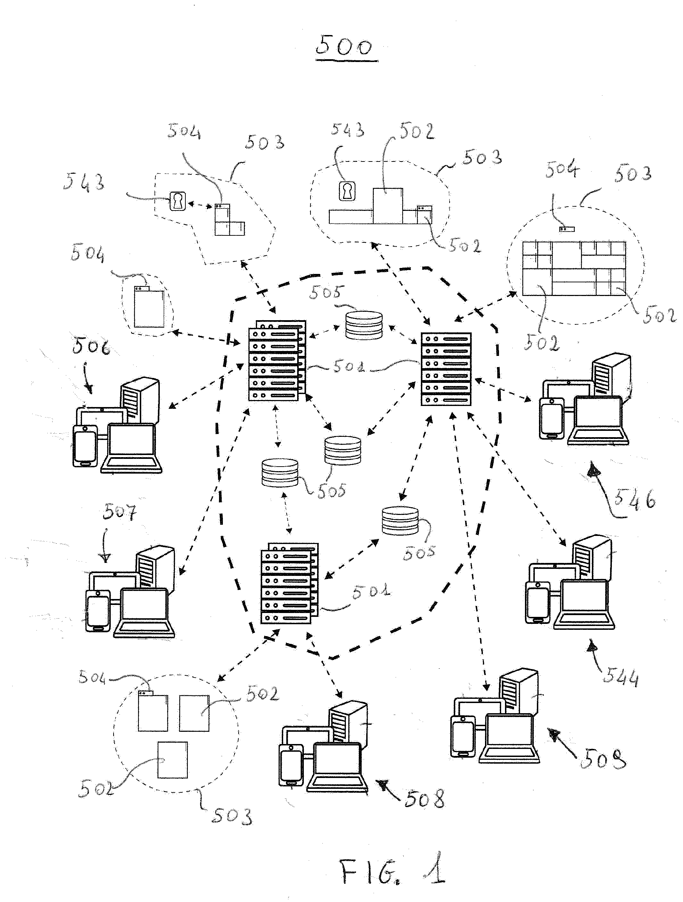

Figure 1 shows a system for managing the shipping and receiving of goods 500, according to a particular example implementation. The goods can be any type, any item such as, for example: parcels, letters, perishable items (food or other products), other types of items or even waste.

According to the example, the system 500 includes: one or more management computers 501, one or more merchandise containers 502 (possibly arranged in groups 503), and one or more communication and control devices 504 associated with the containers 502. In addition, according to a particular example, system 500 also includes access devices 543 to rooms in which containers 502 may be arranged.

Specifically, management computers 501 are server computers that can be deployed throughout the territory to run applications (server-side) designed to manage data and perform the operations of the system 500.

According to the example, the system 500 also includes at least one database 505 for storing data needed to perform the operation of the system 500; the databases 505 can be housed within the servers 501 themselves or be stand-alone units accessible via an Internet and/or intranet.

In particular, each communication and control device 504 is connected to a container 502 or, preferably, to a group of containers 503 and is configured to send to the containers, or to its particular accessories including access devices to the rooms where the containers are located, command signals received from the servers 501 and send to the servers 501 messages received from the containers 502 and/or its accessories.

In addition, the system 500 may include communication devices used by container owners and other users such as, for example: at least one device 546 associated with the container owner, at least one device 506 associated with the seller, at least one device 507 associated with the sender, at least one device 508 associated with the receiver, at least one device 509 associated with the buyer, and at least one device 544 associated with the courier 544.

Such communication devices used by owners and users can be a personal computer (e.g., laptop), tablet, smartphone, or other. The communication devices listed above can be placed in connection with servers 501.

For example, the system 500 also includes software components such as: server-side applications, user-side applications, and/or APIs. Server-side applications are configured to carry out all system operations such as: user and owner management, booking containers 502, opening containers for storing goods in containers 502, and for picking goods from containers 502. User-side applications are executable on the devices associated with users, capable of communicating with servers 501 via Internet connection. APIs can be integrated within owners' and/or users' management software platforms suitable for allowing access to system 500 functionality.

In particular, multiple servers 501 may be provided, each server capable of managing data and operations of owners (defined above), users, and groups of containers 503 in specific territories.

Such a subdivision speeds up the operation of the system 500 and allows for more careful management of sensitive data of owner users; in fact, some owners may demand that their sensitive data be stored in servers located in their home state.

According to one example, one or more servers 501 have mirrors; thus, a malfunctioning server can be replaced immediately by its own mirror without interrupting service. In addition, 505 databases can have mirrors to avoid interruptions in case of malfunctions.

Access devices 543, symbolically depicted in Figure 1, can be, for example: electromechanical locks and/or remotely controllable electrical switches and applied to, but not limited to: doors, sliding doors, gates, shutters, shutters delimiting access to indoor and/or outdoor areas and/or rooms where one more containers 502 can be arranged.

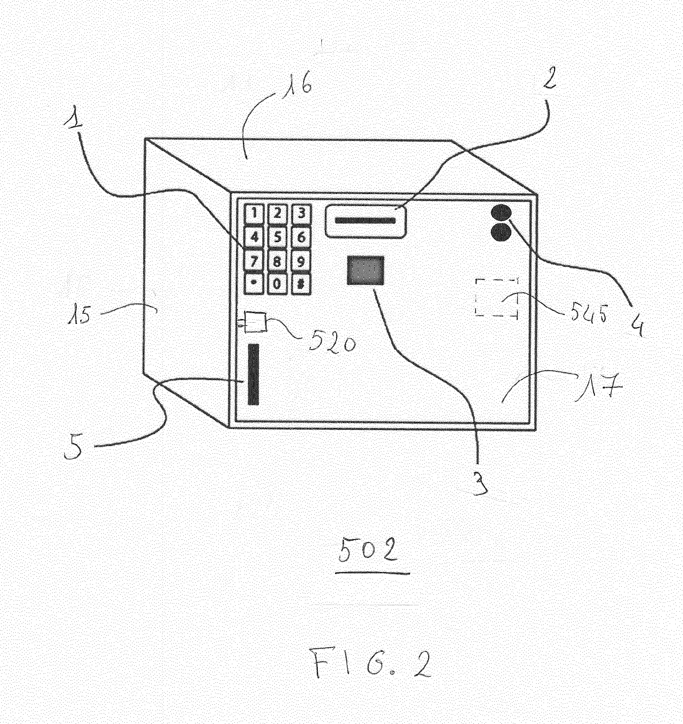

Figure 2 shows a first example of a container 502 that can be used in the system 500. The container 502 in Figure 2 has an example box shape with side walls 15, base walls 16 and is internally equipped with a communication device 545, only schematically shown in Figure 2.

The communication device 545 is in communication with the management server 501, preferably, via the communication and control device 504. Such communication device 545 may include a microcontroller and is suitable for receiving/transmitting data such as, for example, messages or command signals. The communication device 545 may also be equipped with a wireless communication module that enables it to talk wirelessly with the communication and control device 504. Note that the communication and control device 504 can also be internal to the container 502 and replace the corresponding communication device 545.

Container 502 also includes at least one door 17 equipped with electromechanical lock 520. The electromechanical lock 520 is controlled for its opening/closing by the communication device 545 of the corresponding container.

Figure 2 shows, by way of example and not limitation, a container 502 equipped with additional optional accessories such as an opening handle 5, a keypad combiner 1 (for user entry of codes), a magnetic and/or smart card reader 2, a wireless short-range reader 3, and a light indicator 4 of the status of the container 502.

As the following description shows, the container 502 can be made to implement one or more innovative aspects.

### Connectors

The system 500 (as also depicted in Figure 1) has, for certain applications, the use of several containers 502 (made in a similar manner to each other) arranged in the same place and connected both mechanically and electrically to form a group of containers 503.

Such a connection is made by providing the container 502 with a first connector and the other container with a second connector, which can be coupled to the first connector, so as to mechanically secure the two containers and establish between them a connection for an electrical supply voltage and data transmission.

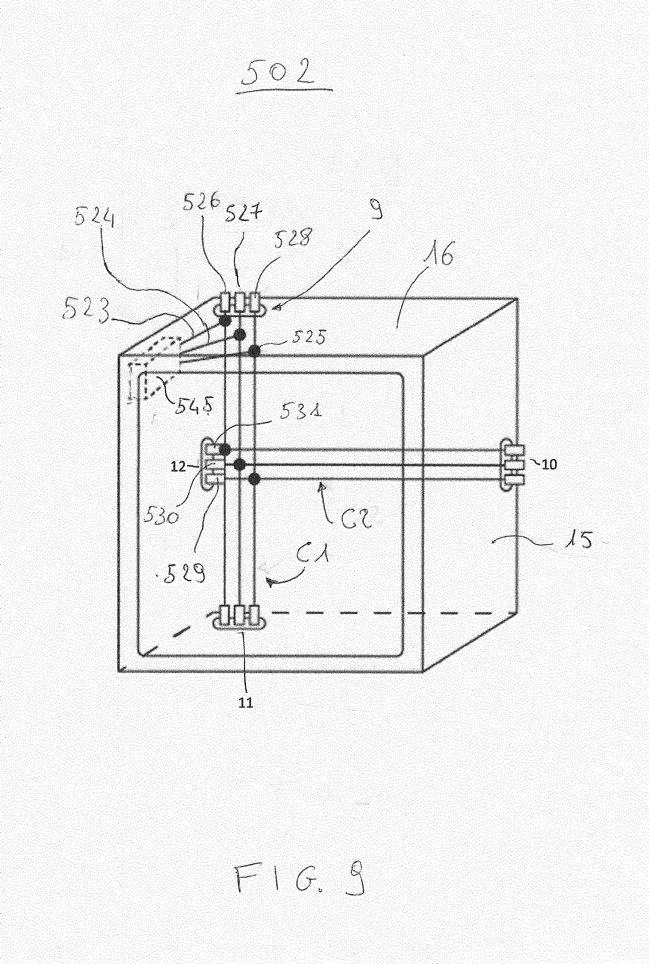

Figure 9 shows a first implementation of connectors with which the container 502 can be equipped to connect to one or more additional containers 502, forming an assembly 503. In the container 502 shown in Figure 9 are: the associated communication device 545, an electrical ground cable (or conductor) 523 (e.g., negative pole), an electrical supply voltage cable (or conductor) 524 (e.g., positive pole), and a cable (or transmission line) for data transmission 525.

These cables are in connection with the communication device 545 in each container 502 of the same group 503. For the sake of clarity, the door and the electromechanical door closure lock are not shown in the figure.

The container 502 in Figure 9 includes a first connector 9 having: a first terminal 526 connected to the ground wire 523, a second terminal 527 connected to the supply voltage wire 524, and a third terminal 528 connected to the transmission wire 525. These terminals 526-528 are housed in electrically insulated housing body.

Particularly, the first connector 9 is a male connector (plug type) and terminals 526-528 are metal contacts protruding outward from the top wall 16 of housing body 502. The container 502 can be equipped with at least one additional male connector 10 (identical or similar to the first connector 9). Preferably, the first connector 9 and the additional male connector 10 are arranged on different walls of the container 502 in order to couple with different additional containers.

Container 502 is also provided with a second female type connector 12 configured to plug-in mate with a male connector (similar to the first connector 9) of another container. The second connector 12 includes a first contact 529, a second contact 530, and a third contact 531. The "socket" type contacts 529-531 are shaped to define relative housings in which to insert the terminals 526-528 of a male type connector. The container 502 is also equipped with an additional female connector 11, arranged on a lower wall of the container.

According to the example in Figure 9, the outputs of the contacts of the additional female connector 11 and the inputs of the terminals 526-527 of the first male-type connector 9 are connected by means of three cables (running internally in the container 502) each connected to one of the cables 523-525 already described. Similarly, the outputs of the terminals of the second female-type connector 12 are connected to the inputs of the terminals of the additional male connector 10 by cables each connected to one of the cables 523-525. The cables inside container 502 connecting between connectors of different types (male with female) can form multi-core cables shown in Figure 9 as first cable C1 and second cable C2.

The power supply associated with cables 523-524 allows the necessary electrical power to be supplied to communication device 545, electromechanical locks 520, and other components, if provided.

Note that it is also possible to use connectors similar to those in Figure 9 but with terminals or contacts that can be connected to four cables, and that is, also having a fourth terminal (for the male type connector) or a fourth contact (for the female type connector) to be connected to a cable or data line to be used for transmissions related to particular procedures such as an autoconfiguration procedure that will be described later.

Note that it is also possible to use connectors equipped with more than four cables if, for example, parallel, non-serial bit communications are desired and/or if, for example, a ground cable associated with each data line is desired for better shielding and noise immunity.

According to a particular form, one or more containers 502 of a group of containers 503 may have male connectors 9 and female connectors 11 on more than one of its walls 15 and 16 and, for example, on each wall minus the door 17. The male and female connectors can be attached to a wall of the container 502 in a reversible or nonreversible manner.

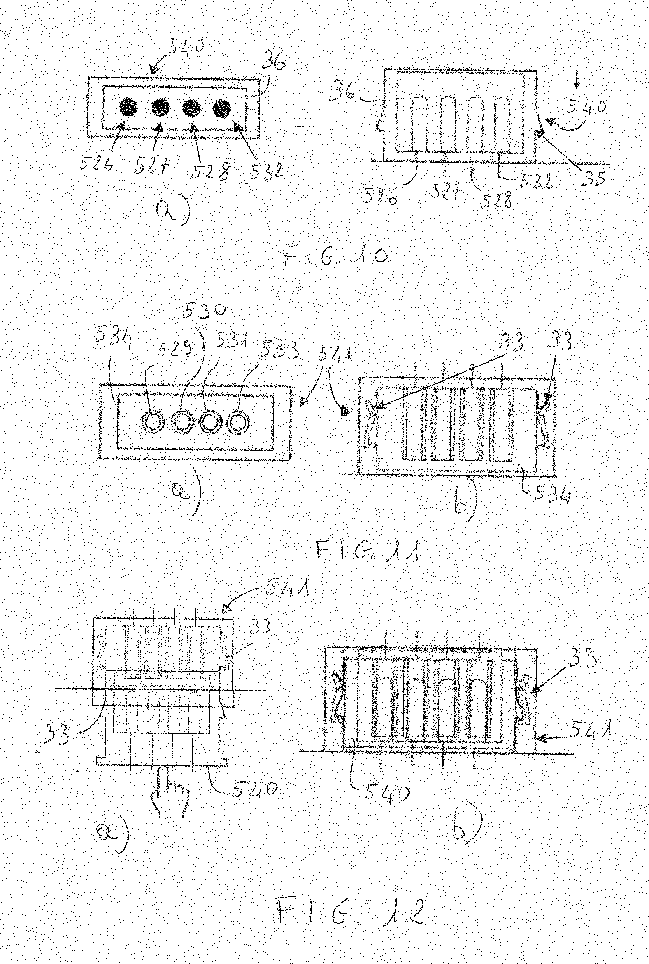

Figure 10 shows, illustratively, various views of a male connector 540 similar to the first connector 9 but also having a fourth terminal 532, which can be used for particular data transmission procedures.

According to the example in Figure 10, the four terminals 526, 527, 528 and 532 are arranged in a housing body 36 that has on two side walls a blocking fin 35. Such a blocking fin 35 is arranged, for example, inside a slide rail cut into the side walls of housing body 36.

Figure 11 shows a female connector 541 configured to engage in the male connector 540. Female connector 541 is similar to the second connector 12 already described but also has a fourth contact 533. Contacts 526, 527, 528, and 533 are cut inside a connector body 534. Two side walls of connector body 534 have a respective self-locking clip 33 intended to interfere with the locking tabs 35 of male connector 540. Note that it is also possible to provide for self-locking clip 33 to be arranged on male connector 540 and locking tab 35 to be arranged on female connector 541.

Figure 12a shows the male connector 540 as it is plugged into the female connector 541, and clip 33 locks onto fin 35 until it reaches the potion in figure 12b. This mode of attachment is particularly quick and easy. Acting on clip 33 allows the male connector to be separated from the female connector; the locking is of the reversible type.

Note that instead of or in addition to clip 33 and flap 35, the two connectors can be attached by screws so as to achieve a very effective anchorage between the connectors and thus between the containers 502. It is also possible to use the connectors for mechanical fastening only or for data transmission only. In fact, it is also possible that some containers 502 may be equipped with an internal battery, in which case it is not necessary to receive power from the outside. It is also possible that some containers may be equipped with an internal battery, whether rechargeable or not, which acts as a buffer and always ensures the operation of the container even in the momentary absence of power from outside.

In an embodiment of the invention, one or more of the male connectors 9 or 540 for coupling between adjacent containers may be retractable with respect to the wall of the container 502. In such a case, by applying pressure to the top side of the connector 9 or 540, the connector is slid to protrude from the container 502 until it is wedged inside the female connector 12 or 541 of the adjacent container. This makes it easy to engage between containers 502.

It is also possible for female connectors 12 or 541 to be retractable and operate similarly to the above.

The use of the connectors described above is particularly advantageous over conventional techniques that propose pre-packaged solutions from the manufacturer. In fact, containers equipped with the connectors described above offer complete freedom to anyone wishing to install them on the territory in defining both the number, shape, size and functionality of the containers and the topological structure, in which the containers are mechanically connected to each other. Freedom in defining number, shape, size and functionality of containers means allowing the characteristics of each a group of containers to be configured to the specific needs of users. Freedom in defining the topological structure, in which the containers are mechanically connected to each other means allowing the group to be configured according to the shape and size of the spaces available for installation. It is thus made possible the widespread distribution over the territory, as the limitations imposed by other similar solutions are removed. In addition, the way the connectors are plugged in does not require specialized personnel resulting in reduced installation costs.

### Container grouping and electrical connection of containers

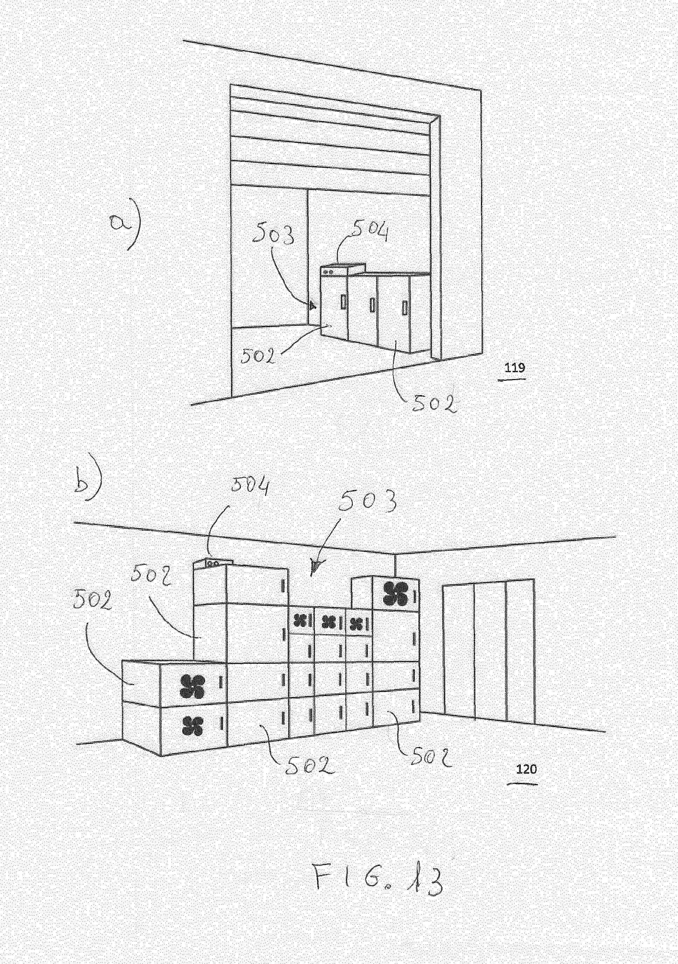

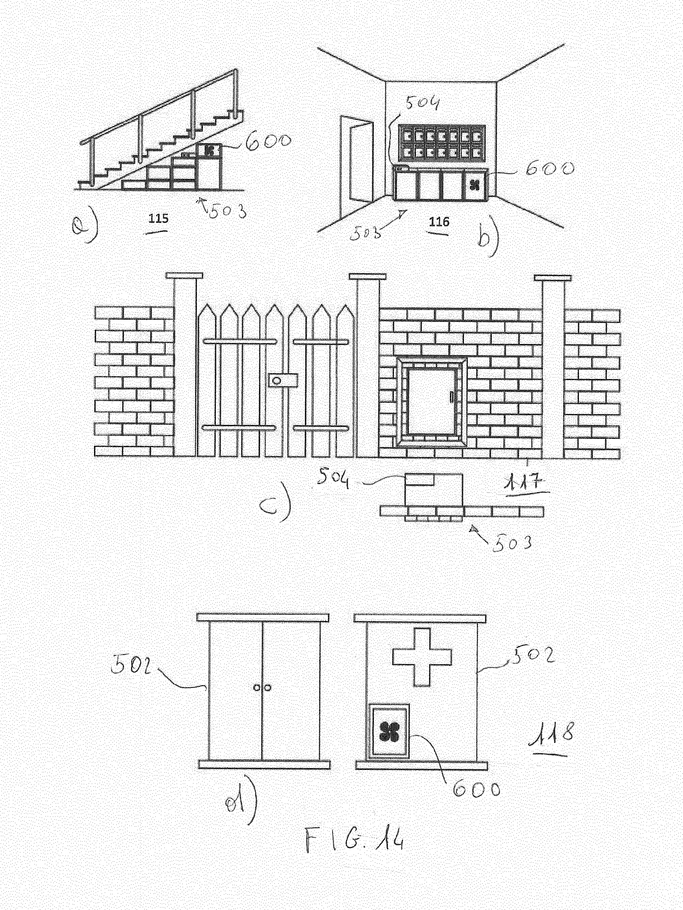

As described above, containers 502 can be attached to each other using male connectors 9 or 540 and female connectors 12 or 541 to form groups of containers 503. Figure 13 shows examples of possible installations of groups of containers 503 for both civilian and industrial use. For example, Figure 13a refers to the interior of a warehouse 119, while Figure 13b refers to the interior of a supermarket 120. Figure 14 refers to other possible installations: in a crawl space (115); inside an apartment building under the classic mailboxes 116; outside the boundary wall of a cottage 117; at a pharmacy 118. Also shown in Figure 14 are containers with Peltier 600 cells for maintaining the storage temperature of medicines; these types of containers will be described later.

The use of the above-mentioned connectors, in addition to the mechanical advantages already described, also offers the essential advantage of not requiring the installer to make any electrical connections, since the electrical connections between the various containers are already pre-constituted in the containers.

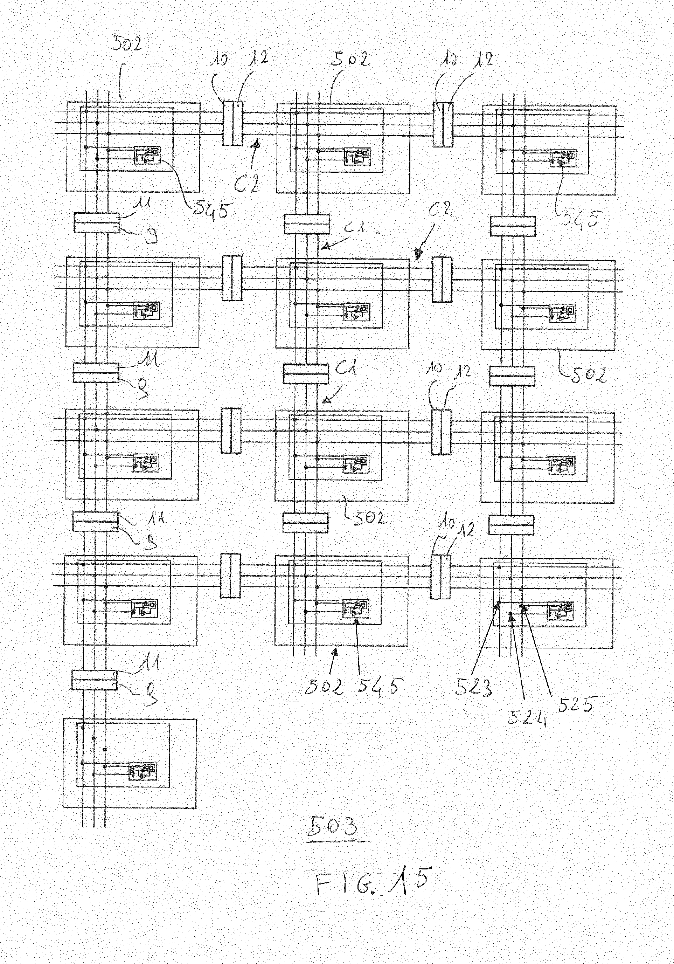

Figure 15 schematizes a possible way of logical organization of the containers 502 of the group 503 and clarifies the electrical connections also with regard to data transmission.

From the point of view of electrical and data transmission connections, containers 502 of the same group 503 can be organized in arrays or matrices according to rows (corresponding to cables C2) or columns (corresponding to cables C1). As already pointed out, the array structure can be of the irregular type, i.e., along the rows and columns of the array there can be different amounts of containers, in order to give full flexibility during the installation of the containers and to allow them to be adapted from time to time to the available spaces.

Exemplarily, connectors of the three-terminal/contact type (male connector 9 or 10 and female connector 11 or 12, as in Figure 9) were considered, but what is described is also valid for the four-terminal/contact connectors in Figures 10 and 11.

As far as data transmission is concerned, this can be serial-parallel: that is, bits are transmitted from a sender device (i.e., the communication and control device 504 or the electronic device in any container) along a communication channel (e.g., the third cable 525 in Figure 9) one after the other temporally, and they reach all connected devices at the same time (barring electrical signal propagation delays along the electrical cables). Serial-type communication requires fewer cables than parallel communication.

Advantageously, to ensure that the container 502 receives the command and sends the data item, an addressing mode is provided according to which to each container 502 is assigned a unique identification code within the group 503 or even within the entire system 500.

According to this mode, the data string that is sent to the containers 502 simultaneously contains within it the address of the destination container 502 and the data item that can be, for example, an open command. All containers 502 read the data string, but only the container, which recognizes within the string its own unique code, executes the command encoded in the string.

Conversely, the container that needs to send a response to the communication and control device 504 sends a string having inside a unique code of the container and the data, e.g., "open command executed."

The communication and control device 504 will know exactly from which container 502 the data was received. System 500 also provides for the possibility that some containers 502 may have a radio frequency communication device to talk to the group 503 communication device.

The connectors (9, 10, 11 and 12) of the containers 502, which are located at the end of a row and/or column and which have no other adjacent containers to send power and data to, can be suitably closed in order to prevent access from outside to the power cables.

It should be noted that for cables dedicated to data, it is advantageously possible to provide, as a preferred but not exclusive solution, a closure load that prevents the reflection of electrical signals.

### Forms of implementation with movable separator septum

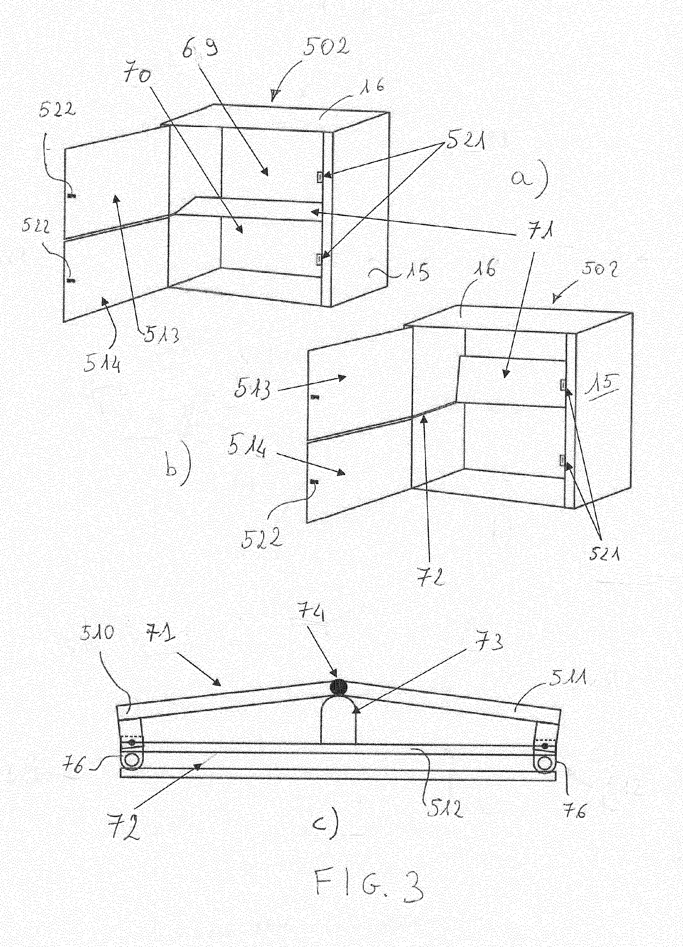

Figure 3 refers to a first form of implementation of container 502 according to which the container includes a movable separator septum 71. According to the form of implementation in Figure 3, the movable separator septum 71 is arranged horizontally, that is, parallel to a horizontal plane, which may be the plane of a floor. The movable separator septum 71 can assume a closing position (figure 3a) in which it separates the interior of the container 502 into an upper compartment 69 and a lower compartment 70, and an opening potion (figure 3b) in which the upper compartment 69 and the lower compartment 70 are connected so as to form a single interior compartment.

Note that it is also possible for a 502 container to be fitted with two or more movable separators and thus have more than two separable compartments.

Figure c) shows a side view of separator septum 75 (as would be visible through side 15), mounted in container 504.

The movable separator septum 71 is in the form of a folding panel comprising a first panel 510 hinged to a second panel 511.

The container 502 also includes a handling device 512 of the separator septum 71 between the first and second positions. The handling device is configured to operate based on control signals provided by the communication device 545.

Such a handling device comprising an electric handling motor (not shown) mechanically coupled to motion transmission organs mechanically connected to the movable separator septum 71. More particularly, the motion transmission organs include a conveyor belt 512 moved by the electric motor. Other illustrative ways of realizing the movable separator septum 71 are the bellows and accordion type.

The first panel 510 is hinged to the second panel 511 according to a rotation pivot 74. The extreme portions of the first panel 510 and the second panel 511 are hinged on casters 76 suitable for sliding along a guide 72 formed along each side wall 15, inside the container 502.

The conveyor belt 512 is connected to one end of the first panel 510 and/or the second panel 511 so that, in order to achieve closure, the first panel 510 and the second panel 511 are moved so that the first panel overlaps the second panel 511, which is arranged parallel to the rear wall of the container 502.

Advantageously, the guide 72 is provided with a notch 73 that in the closed position (Figure 3c) keeps the separator septum 71 not totally in line parallel with the top and bottom surface of the container 502, this is to ensure the correct opening and closing phase and to avoid any blockage in the folding phase on the pivot pin 74.

It should be noted that the presence of the separating septum 71 offers the advantage of significant flexibility of use because it is possible to accommodate, if necessary, goods of larger dimensions than those of the individual compartments, without the need to install oversized containers that would be cumbersome and little used.

Specifically, container 502 is equipped with two doors (or other type of opening devices, also called "doors"): an upper door 513 opening/closing the upper compartment 69 and a lower door 514 opening/closing the lower compartment 70.

Other types of opening devices include folding multi-panel folding doors, dampers of different shapes and sizes, roll-up dampers, and sliding dampers.

Advantageously, upper door 513 and lower door 514 are associated with a related electromechanical lock assembly 520 (number not shown in Figure 3) of which lock blocks 521 and lock strikers 522 are represented. The electromechanical lock assembly comprising lock blocks 521 and lock strikers 522 is such that it allows the opening to be locked or the opening to be unlocked of the corresponding door based on signals from the communication device 545.

It should be noted that the use of compartments arranged one on top of the other according to a vertical direction (as is the case in container 502 in Figure 3) allows, by carrying out the opening of the movable separator septum 71, the gravity transfer of goods from the upper compartment 69 to the lower compartment 70. The use of this type of container allows goods from multiple deliveries, usually to the same consignee, to be deposited and housed simultaneously, without the person depositing the goods inside having access to previously deposited goods. This possibility is particularly advantageous.

For example, the upper compartment 69 is used to receive goods and therefore its upper door 513 is usually opened for the sole purpose of letting in goods; after that the upper door 513 is closed again. The separating septum 71 moves, allowing the goods to be transferred to the lower compartment 70; after the transfer has taken place, the separating septum 71 closes again. This operation can be repeated several times. The consignee at a later time accesses the stored goods by opening the lower door 514 of the lower compartment 70. The transfer of goods upper compartment 69 the lower compartment 70 can be carried out, preferably, when a separator septum of the damper type is used.

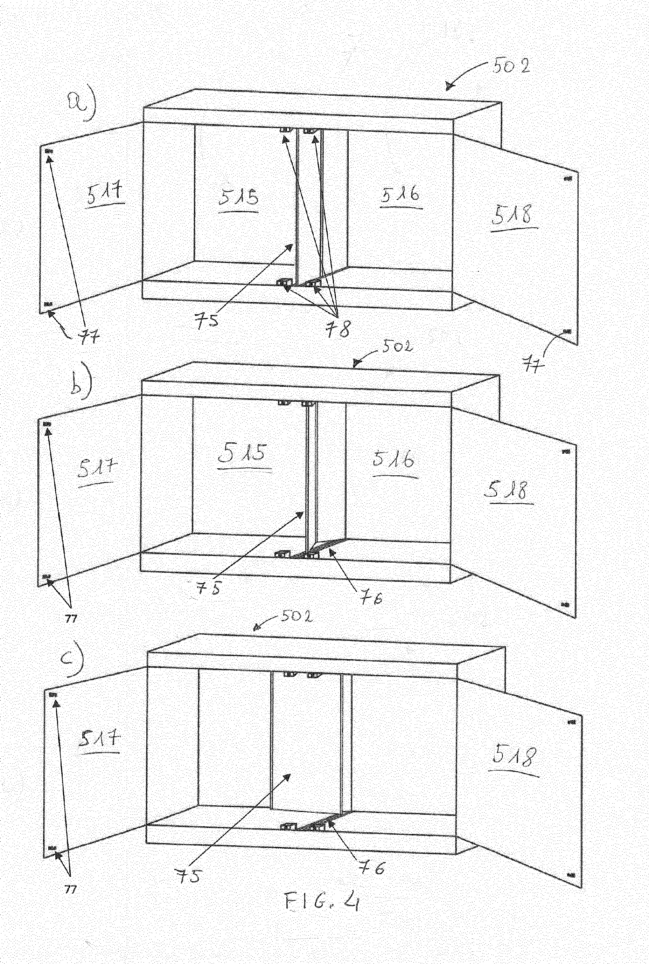

Figure 4 refers to a solution similar to that in Figure 3 but in which container 502 is provided with a vertical separating septum 75 arranged perpendicular to the horizontal plane. In this case, the vertical separator septum 75 separates, when in the closed configuration (figure 4a) the interior of container 502 into a right compartment 515 and a left compartment 516. The vertical separating septum 75 is analogous to the horizontal separating septum 71 described above and is, in the example, of the two hinged, folding panel type.

There is also a right door 517 and a left door 518 facing right compartment 515 and left compartment 516, respectively.

In Figure 4a the vertical separator septum is in the closed position, in Figure 4b it is in the open position, and Figure 4c shows the vertical separator septum 75 in the open position. In the closed position, the two panels that make up vertical separator septum 75 are facing each other and parallel to the rear wall of container 502.

Each of the right compartment 515 and left compartment 516 is equipped with relative lock blocks (e.g., electromechanical locks) 78 arranged to face the relative hooks 77 arranged on each of the right door 517 and left door 518. The lock blocks 78 and hooks 77 are an example of a possible electromechanical lock 520 associated with each door.

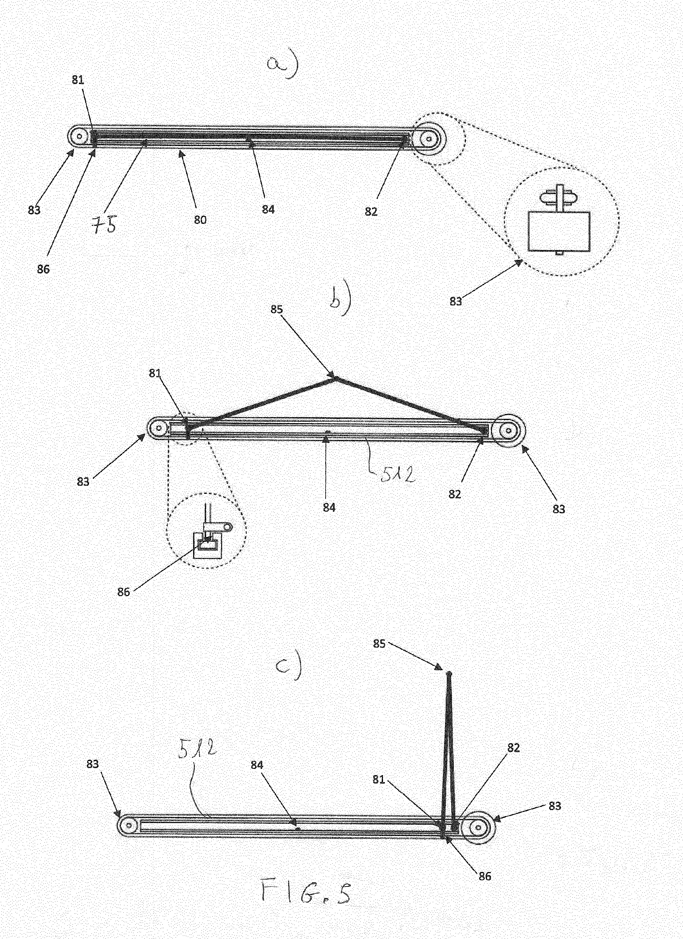

Figure 5 shows an example of a handling device for the movable vertical separator septum 75. The vertical separator septum 75 is movable on a predetermined trajectory given by a relative guide 80 within which is an additional conveyor belt 512 to which one end of the vertical separator septum 75 is integral by means of a fastening pin 81. An opposite end 82 of the vertical separator septum 75 is attached to a pulley support 83 that allows the conveyor belt 512 to rotate.

As in the case of the horizontal separator septum, in the central area of the guide 80 there is an additional notch 84 that places the septum itself not totally in parallel line with the side walls of the container 502: this, to ensure the correct opening and closing phase and to avoid any blockage in the opening and closing phase around a relative pivot pin 85.

At the "movable" end of the vertical separating septum 75 there is a blocking element 86 that acts as a stop when the end reaches the other end of the vertical septum 75, located close to the pulley 83 present at the bottom of the container 502. Pulley 83 is operable by an electric motor (not shown) with which container 502 is equipped.

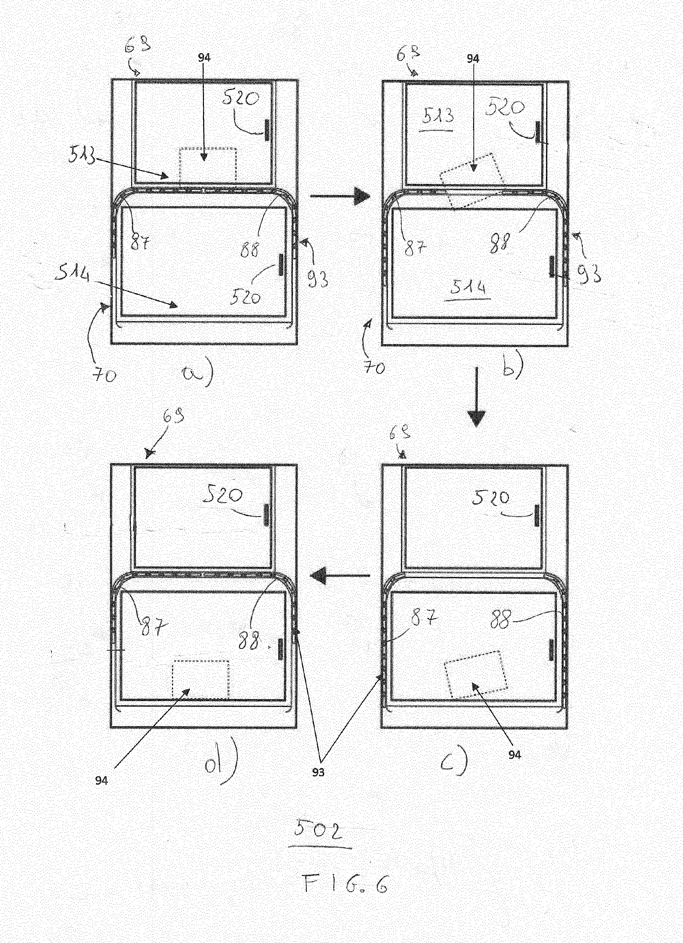

Figure 6 refers to an implementation form in which the movable separator septum is of the gate type and indicated by the numerical reference 93.

Similar to the solution in Figure 3, the movable separating gate valve 93 is of the horizontal type, which then subdivides (when in the closed configuration) the interior of container 502 into upper compartment 69 and lower compartment 70 with associated upper door 513 and lower door 514.

More particularly, the movable dividing shutter 93 comprises a first shutter 87 and a second shutter 88 structured to be moved within side rails present, for example, in the lower part of the container 502.

Figure 6 also shows an illustrative mode of use. Figure 6a, refers to an object 94 (e.g., a package, letter, or merchandise item) being introduced into the upper compartment 69 by opening the upper door 513, using the corresponding electromagnetic lock 520.

In Figure 6a, the movable gate separator septum 93 is in the closed position. When the upper door 513 is closed again, the related lock 520 (or a related sensor) sends a signal to the communication device 545 (not shown in figure 6) informing it that it has been closed. The communication device 545 then proceeds to control an electric motor associated with the separating septum 93 so as to move away (figure 6b) the first shutter 87 and the second shutter 88 opening a passageway within which the object 94 falls to be stored in the lower compartment 70 (see also figure 6c). For example, it can be expected that after a time set by the system 500, the communication device 545 will command the closure of the gate separator septum 93 (figure 6d) and enable the eventual opening of the lower door 514 for access to the lower compartment 70, for the purpose of a user's withdrawal of the object 94. It is also possible to use infrared sensors appropriately placed in the lower compartment to detect and communicate to the communication device 545 that the goods have been dropped into the lower compartment.

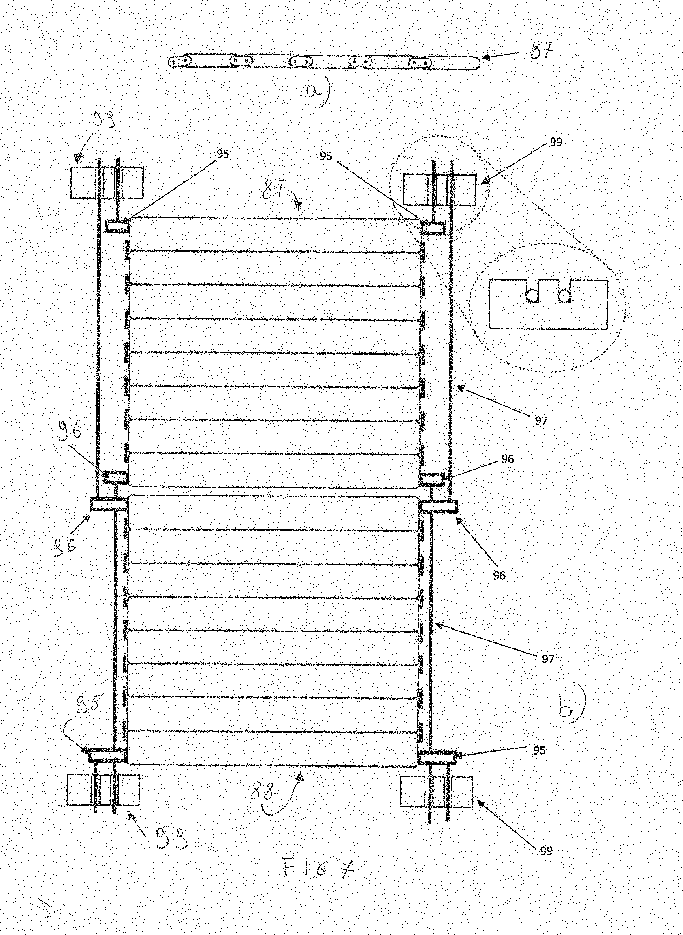

Figure 7 shows a preferred, but not exclusive, execution of the gate separator septum 93 and particularly of the first gate 87 and second gate 88. The gate separator septum 93 can be made of a lightweight but strong material and placed inside rails arranged laterally (at the sides) of a container 502. The lower 95 and upper 96 ends of the first shutter 87 and the second shutter 88 are attached, through the aid of steel cables 97 to a pulley (or several pulleys) that are the arm of an electro-motor located at the base of container 502.

In the opening step, to allow the goods to be transferred, the electro-motor will drag and slide down the two shutters 87 and 88 along the side guides exerting traction by means of the metal cables hooked to the ends 95. When reclosing, the electro-motor will exert traction by means of the metal cables hooked to the ends 96.

To avoid the overlapping of the cables moving asynchronously with respect to each other, a specific guide 99 is advantageously provided, while the pins hooking the cables to the damper, identified with the lower or upper ends, by design architecture will pass over the guide 99 not impeding its movement.

Note that it is also possible to provide for the gate separator septum 93 to have a single moving gate within a guide between the closed and open positions.

### Form of realization of the communication and control device 504

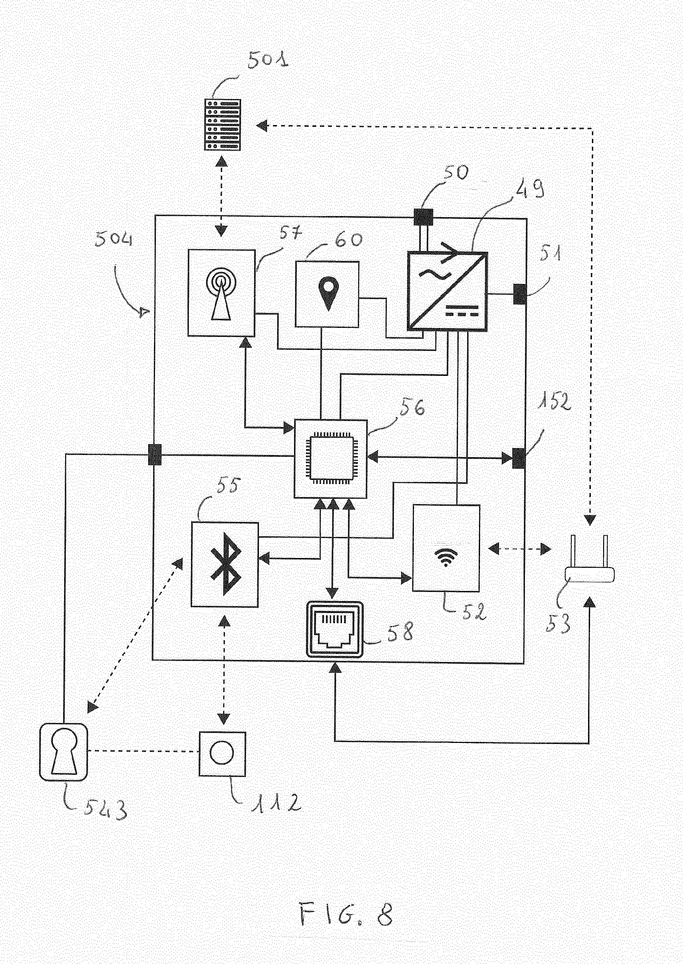

Figure 8 shows a particular form of realization of the communication and control device 504 (which can be realized using a microcontroller). The communication and control device 504 includes a processing and storage module 56 (hereafter also referred to as central chip 56), such as a CPU with associated data and program memories.

In terms of communication aspects, the communication and control device 504 includes, for example, a first communication module 57 that can talk with the server 501 and the central chip 56. For example, the first communication module 57 is a GSM and/or IoT module. In addition, there may be a second communication module 52, for example, of the wi-fi type (in particular, ultra-low power) configured to send and receive data from the central chip 56, which in turn may send and receive data to/from a router 53, in connection with the server 501 and/or to one or more access devices 543 possibly associated with the group 503.

According to one example, there is a third Bluetooth-type communication module 55 connected to the central chip 56. Such a Bluetooth module 55 can advantageously provide communication between the device 504 and one or more access devices 543 possibly associated with the group 503. In addition, the Bluetooth module 55 may communicate with a control switch 112 of an access device 543. The communication and control device 504 may also be arranged for a LAN socket 58 connected to the router 53 for communications to and from the server 501.

Preferably, the communication and control device 504 is also equipped with a GPS module 60 provided for automatically communicating to the servers 501 the location of the relevant container assembly 503.

Note that the communication and control device 504 may be equipped with only one or only some of the communication modules described above.

According to a particular form of implementation, the communication and control device 504 is programmed to encompass various functions including: sending open and/or close commands to the containers, commands to check the status of the containers, commands to set the temperature inside the containers, perform the installation verification procedure and self-installation.

With reference to electrical power supply, the communication and control device 504 may have a power supply device 49 capable, for example, of receiving and transforming a 220 volt f.e.m. (available at terminal 50) and transform it into DC voltage in order to power the internal circuitry of the communication and control device 504 itself and that of other containers 502 connected via connection 51. Communication between containers 502 is provided by one or more data lines connectable to a data terminal 152.

### Electromagnetic lock and door opening/closing sensor

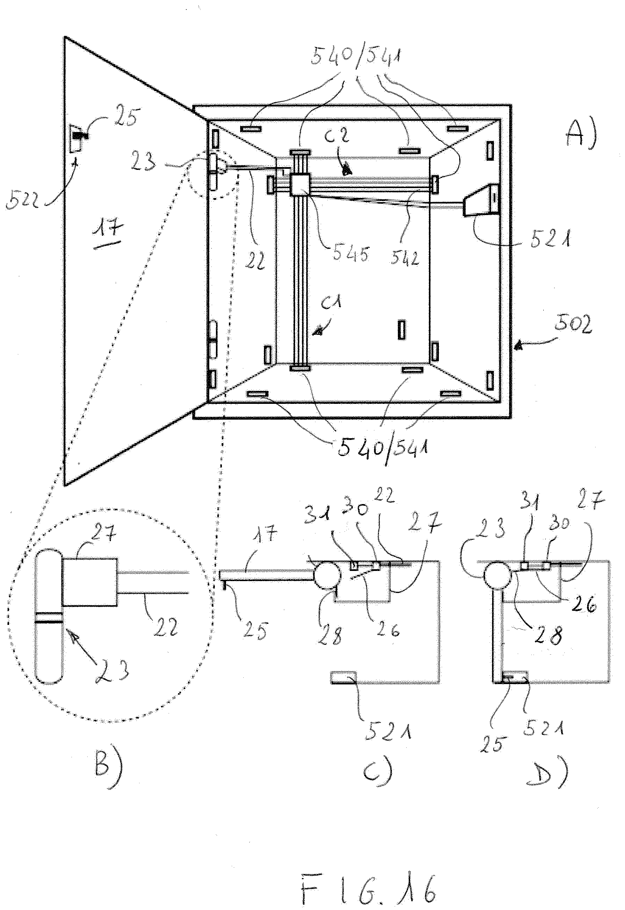

Figure 16 shows a container 502 analogous to that of figure 9 but in which, by way of example, the first cable C1 and the second cable C2 are of the four-core multipole type. The container 502 of figure 16 is provided with a plurality of male connectors 540 of the type described in figure 10 and a plurality of female connectors 541 of the type described in figure 11.

As already described, each of the cables C1 and C2 comprises a ground electrical cable 523, a power supply voltage electrical cable 524, a data transmission cable 525 (shown in figure 9 but not in figure 16) in and, according to one example, also a serial transmission cable (shown in figure 16A), which can be used, for a self-configuration procedure 542 (which will be described later).

Furthermore, figure 16 shows an example of an implementation of a sensor configured to generate a signal to inform the communication device 545 located inside the container 502 about an opening and closing configuration of the door 17.

According to a particular embodiment, the lock of figure 16 is of an electromechanical type and comprises (figure 16A) the lock block 521 and the lock striker 522, located on the door 17. The door 17 is rotatably fixed to a wall of the container 502 by at least one hinge 23. The lock block 521 is fixed internally to a wall of the container 502 and is connected to the communication device 545 by means of a cable. For example, the lock block 521 is of the electromagnetic type and, in particular, comprises within it a solenoid which, when an electric current is passed through it, generates a magnetic field which activates a latch acting on the lock striker 522 (i.e., for example, a notch 25), thereby keeping the door 17 closed or so as to release the notch 25 and allow the door 17 to be opened.

Advantageously, the latch sensor is implemented inside the hinge 23, which is fixed internally to the door 17.

Figure 16B shows an enlargement of the hinge 23 also a protection box 27 in which the sensor is arranged, which is electrically connected, by means of conductors 22, to the communication device 545.

Figure 16C shows, schematically, a top view of the door 17 with the hinge 23 and, in addition, depicts the sensor inside the box 27. Said sensor comprises a first electrical contact 30 and a second electrical contact 31, each connected to a respective conductor 22.

In addition, the sensor comprises a conductive reed 26 attached to the first contact 30. The conductive reed 26 (preferably, of a metal type) is movable, (e.g., due to its flexibility) between a closed position where it is in contact with the second contact 31 and an open position where it is spaced apart from the second contact 31. A push flap 28 (e.g., made of plastic) is attached to the hinge 23 which is capable of rotating with the hinge 23.

When the door 17 is open (figure 16C), the thrust lamella 28 does not act on the conductive lamella 26 and therefore the electrical circuit comprising the first contact 30 and the second contact 31 is open and the communication device 545 detects the open door 17 condition. When the door 17 is closed (figure 16D), the rotation of the hinge 23 causes the thrust flap 28 to touch the conductive flap 26 at the end of its stroke, flexing it and allowing the closing of an electrical circuit between the first and second contacts 30 and 31. This closure is detected by the communication device 545 as a signal of successful closure.

Note that the insertion of the sensor inside the hinge 23 prevents tampering of the same. Any sensor placed externally, such as a proximity sensor, could easily be tampered with by sending the microcontroller information of an incorrect status. Even the insertion of the sensor inside the lock, as is the case in a known mode, could be tampered with. In fact, it is sufficient to insert a copy of the latch pin inside the lock to cause it to send the locking status while the door is still open.

### Examples of access modes to rooms with groups of containers

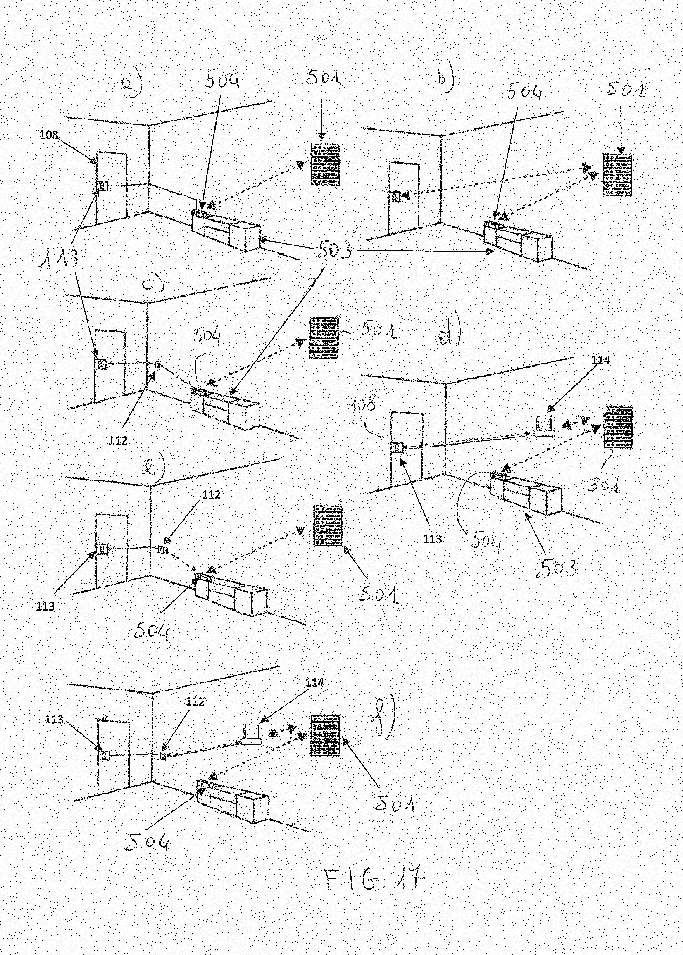

Figure 17 shows various possible installations of a group of containers 503 arranged within an area whose access is constrained by the opening of electromechanical lock 113 of a door 108 that can be opened/closed according to one or more of the following modes. The opening request is sent by the container owner and/or user to the cloud server 501, the cloud server sends the open command to the container according to one of the following modes:
- the cloud server 501 sends the command to the communication and control device 504, which forwards it to the 113 (figure 17a);
- the cloud server 501 sends the command directly to device 113 (figure 17b);
- the cloud server 501 sends the command to communication and control device 504, which is wired to a switch 112 that closes the circuit to trigger the opening/closing of door lock 113 (figure 17c),
- the cloud server 501 sends the command to the device 113 via an installed wifi router 114 (figure 17d)
- the cloud server 501 sends the command to the communication and control device 504, which wirelessly redirects it a switch 112 that closes the circuit so that the opening/closing of the door lock 113 is triggered (figure 17e),
- the cloud server 501 sends the command to a switch 112, via a wifi router 114, the switch 112 closes the circuit to trigger the opening/closing of the door lock 113 (figure 17e).
The lock 113 and the switch 112 are examples of access devices 543 shown illustratively in figure 1.

### Temperature control

According to a particular embodiment, one or more containers 502 may be configured to control the internal temperature within predetermined limits and thus operate as cold rooms or oven cells.

More specifically, temperature control is achieved through the use of Peltier cells. Peltier cells are small in size and lend themselves well to being integrated into even a small container, they can generate both cold and heat quickly by simply reversing the direction of the current through the semiconductor junction, they can be switched on and off countless times without risk of damage.

Peltier cells are particularly suitable for use in containers where the cold room/fumace is switched on only a few minutes before the expected use (goods in) and switched off as soon as use ceases (goods out).

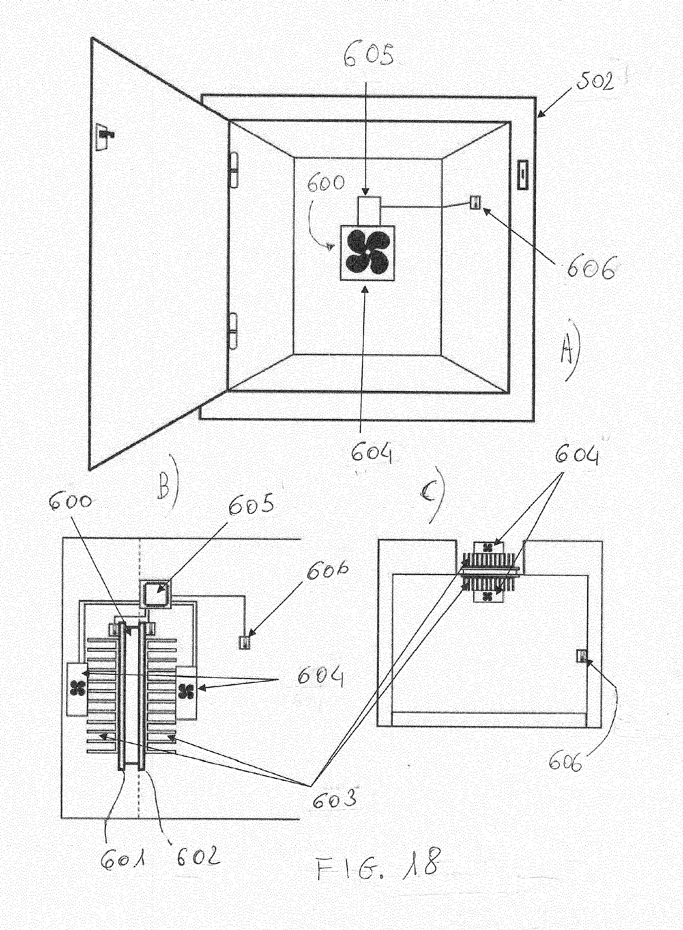

Figure 18A illustrates, by way of example, a container 502 equipped with a thermoelectric device 600 comprising a Peltier cell 600 (Figure 18B), which, depending on the direction of the direct current applied to the ends of a corresponding plate, heats or cools the interior of the container 502.

In particular, heat sinks 603 on which a relative fan 604 is arranged are placed at the two plates of the Peltier cell, which alternately function as a cold plate and/or a hot plate. The speed setting of the fans 604 is regulated by a control chip 605 connected to a temperature sensor 606.

### Particular type of communication: serial-parallel

As mentioned above, according to a particularly advantageous embodiment, with reference to a group 503, the communication and control device 504 and the communication devices 545 inside the containers 502 are all connected to each other according to a matrix structure (regular or irregular) (example of figure 15). On each row and/or column of the matrix, a number of devices can be connected independently of the other rows and/or columns; the communication devices 545 are therefore not necessarily connected in series with each other as, for example, provided for in the RS485 protocol.

This is also evident from the example in figure 14 where the use of connectors 10/12 and cables C1 and C2 means that each communication device 545 is connected to every other communication device 545 in the group 503. Each container 502 can, at separate time instants, both transmit and receive data. This type of connection is referred to hereafter as 'serial-parallel'.

Even though the communication between the containers 502 of a group 503 is, as already mentioned, serial (i.e., one bit is transmitted after the other), thanks to the type of connection realised between the communication devices 545, each transmitted bit is received simultaneously (except for the inevitable propagation delays of the electrical signal) by all connected receiving units. Each communication device 545 can both transmit and receive data.

The serial-parallel connection is useful in applications where total freedom in wired connection between units is a fundamental requirement, possibly accepting low to medium data rates (baud rates).

### Example of serial communication mode

According to a particular mode, serial communication on the serial-parallel line between a communication and control device 504 and the communication devices 545 of the containers 502 of the same group 503 takes place as follows:
- the electrical support is constituted by a power line where '0' is equal to the value of 0Volt or ground and '1' is equal to the nominal value of Vcc, supply voltage. This electrical line is connected to ground by means of a suitable resistor, which we call Rn;
- for sending data, the connection on the line is made via a digital port with a tri-state function and a suitable resistor in series, which we call Rc. In the case, where no data is to be transmitted, the Tri-state signal is active and sets the output of the port to high impedance;
- for data reception, the connection on the line is via a digital port with Schmitt's Trigger for the elimination of transient signals and signal noise;
- the ratio of Rc to Rn is preferably in the range of 0.25 to 0.5;
- communication takes place at a low baud rate, e.g. 9600 or even lower;
- in order to reduce the effect of signal reflections caused by too steep rising and falling edges at the output of digital ports, the resistors Rc, in addition to being connected to the electrical data transmission line, are also connected to ground via a suitable capacitor which we call Cc. Thus the output voltage from a digital port varies over time according to the formula: e^{-t/τ}

Where τ is the product of Rc and the parallel between all Cc with Rn. The choice between Rc, Rn, Cc and the baud rate must allow:
1) to be able to connect even a high number of containers, e.g. 50;
2) to keep the rising and falling edges such that there are no signal reflections and such that they do not last longer than 10% of the 1bit time length.

The procedure outlined above allows the use of a single physical medium for sending and receiving data with savings in connection complexity.

Furthermore, the risk of two units transmitting data simultaneously is avoided. In an embodiment of the invention, the paralleled line, referred to in the preceding paragraph, consists of a bipolar connection where differential signals travel in order to increase immunity to common mode noise. The communication protocol is the same as in the preceding paragraph.

### Closed areas

In an embodiment of the invention, one or more groups 503 of containers 502 are housed in enclosed areas (as for example shown in Figures 13 and 14) delimited by doors, shutters and the like and provided with access devices 543 (Figure 1) controlled by the communication devices 504 of the groups themselves. Control is achieved, for example, by commands sent wired or wirelessly via Bluetooth or sub-GHz RF modules. For example, the user sends the open request to the servers 501, the servers 501 send the open command to the communication and control device 504, which in turn transmits it to the access device 543.

In an embodiment of the invention, the access device 543 receives the open command from a button wirelessly orwiredly connected to the communication and control device 504. In particular, the button referred to in the point is equipped with a wifi module and receives the open command directly from the servers 501 via the internet.

### Assembly

In a particular embodiment, the procedure for assembling an group of conatiners 503 with a communication and control device 504 equipped with a communication module (such as module 57 of Figure 8) over a mobile network is as follows:
- the containers 502 are mechanically and electrically connected to each other by means of the appropriate male/female connectors (9 or 11), making sure that each pair of male/female connectors is joined together. The containers can be connected together in a variety of ways;
- once assembly of the containers 502 is complete, the communication and control device 504 is connected to any of the containers in the group, preferably placing it above the containers;
- power is supplied to the communication and control device 504, consequently the latter via the AC/DC converter (power supply device 49) inside it supplies power to all the containers of the group. A LED in the communication and control device 504, if present, can inform whether power has been switched on correctly;
- the communication and control device 504 sends a power-up message to the server 501;
- the server 501 sends a message to the group owner's application (as defined in the foreword) that the communication and control device 504 has been turned on, and that the system 500 is ready to start verification of the installation;
- the owner via the application on its device sends the server 501a request to verify the installation;
- the server 501 sends the door opening command in sequence via the communication device to each container 502 in the group. At this stage the containers are addressed by their unique code. Container 502 opens door 17 and sends confirmation to server 501 that the door has been opened.
- the server 501 sends the owner's application confirmation that the door has been opened and asks it to close again. The owner closes the door again and the container sends the server 501 confirmation that it has been closed;
- in the event of a malfunction, i.e. containers that do not give the expected response to the server 501, the server notifies the owner of the malfunction, possibly asking it to check the connections and/or replace the malfunctioning containers.

### Labelling phase

Once the step of verifying the correct operation of the containers 502 has been completed, the labelling step of the containers proceeds as follows:
- for each container 502 of the group 503 the system 500 sends in sequence the command to open all the doors 17 equipped with an electromagnetic lock;
- for each door 17 the owner writes into the application the label (a code) he decides to assign to that door and closes the door again;
- the system 500 communicates to the container 502 a unique serial number among the containers in the same group. This number is memorised both by the server 501 and by the container's electronic device 56 (Note that later in the container's use, the system may use this unique code to communicate with a specific container in a specific group, the communication and control device 504 will also use this code to communicate with the containers in its group. Such a code, being unique within a group, is likely to be shorter and this makes communication faster).
- the system after detecting the closure of door 17 proceeds with the opening of the next one;
- after all the doors in the container have been labelled (with their codes), it proceeds to the next one (Note: as the owner writes the label for a door into the application, the owner physically applies the same label to the door).

In a particular implementation, the assembly of a container assembly with a communication device equipped with a wifi communication module takes place as follows:
- The owner connects via his own device to the communication device using the RJ45 connection or Bluetooth, if available;
- connection is made, the owner sends the following information to the communication device: router address of the local wifi network, password for accessing the local wifi network. Static IP of the router if available otherwise it is identified on the network via a dynamic DNS and makes a test connection to the server.

If the test connection is successful, we proceed with the steps described above in relation to assembly verification and labelling.

In a particular realisation, communication between communication devices and containers on a parallel data line takes place as follows:
- the communication and control device 504 sends a serial data string on the data line which contains within it: a unique identification code of the container 502, the command to be executed;
- all 502 containers simultaneously read the string transmitted by the communication device on the data line. Only the 502 container that recognises its own unique code within the string, executes the command and sends the response string consisting of: communication device identifier, response message on the data line.

Although the electrical connections between the communication and control device 504 and the various containers 502 are usually short (a few metres) when compared to the transmission speed of the electrical signals, it is still possible for the servers to set the baud rate to be used in order to minimise communication errors.

### Self-configuration procedure

According to a particular realisation, one or more containers 502 have their respective communication device 545 connected with serial lines with one or more adjacent connectors, one serial line for each adjacent connector. Thus, in addition to the possible serial-parallel line (see also figure 15) on all connectors, it is possible to provide serial lines to allow the containers 502 to have direct communication with right and/or left and/or top and/or rear adjacent containers.

The presence of such serial connections allows the communication and control device 504 to perform a self-configuration procedure of the containers 502. The purpose of this self-configuration procedure is to communicate to the servers 501 the manner in which the containers 502 have been assembled together into an assembly 503.

In one but not exclusive form, the electrical connection for data transmission may be single (and in this case two adjacent containers use the same line to send and receive data) or dual (and in this one line used by one container to send data to another adjacent container, the other to receive data from an adjacent container). Note that these additional serial lines can also be used to receive the open commands and send the closed door signal.

The presence of serial connections between each container 502 and adjacent containers allows the system 500 to perform not only verification of the correct installation of the group of containers 503, but also to determine how the containers 502 have been assembled.

According to an example, the self-configuration procedure of a group of containers 503 with serial connections between adjacent containers takes place (for example, in a recursive mode) by performing the following steps:
- the owner sends the system a request to start autoconfiguration of a given group of containers 503;
- the server 501 sends the autoconfiguration start command to the communication and control device 504 of said container group, the command string may consist of: command code, unique code associated with the command (e.g. current datetime);
- the communication and control device 504 sends the autoconfiguration command with the associated unique code of the autoconfiguration procedure (which we call CODID) to the container 502 connected to it, for example the container B1, and waits for a response;
- recursively the communication device 545 of each container 502, which receives the command through one of the serial ports (each serial port is identified by a code indicating its position in the container with regard to the side walls: top, bottom, right, left, back)
- sets its own response string by entering its own unique code, which for the i-th container we define as DBi;
- checks whether the identification code associated with the autoconfiguration procedure command is not the same as the last one received. If equal, the container returns as a response string the message "●" followed by its own identification code (DBi), if different it sends the message "standby" to the port from which the autoconfiguration command was received and executes the next steps. The identification code has the function of preventing the autoconfiguration procedure from entering infinite loops; for this reason if, during an autoconfiguration procedure, an electronic device receives the autoconfiguration command for the second time with the same identification code associated, it is clear that there is a risk of entering an infinite loop; for this reason the electronic device responds with "●"+DBi and does not carry out the next steps;
- sequentially sends a self-configuration message with its CODID identification code to the other serial ports in sequence: you send the message to a port and wait for the response; when the response is received, you change the response string as follows
- string=DBihigh(reply), if coming from the above container
- string=DBlow(response), if coming from the container below
- string=DBright(response), if coming from the container on the right-hand side
- string=DBleft(response), if coming from the container on the left-hand side
- string=DBrear(response), if coming from the container at the back
- after sending the messages to all ports except the one from which it in turn received the autoconfiguration request, and getting the replies, the container sends the generated string to the port from which it received the autoconfiguration command.

From the string received, the central 501 server is able to reconstruct exactly the topological structure of the group and know all the serial links between the containers.

It should be noted that the same topological structure of the container group could have been described by other strings or by a different query procedure.

Servers may use the self-configuration information in order to:
- verify violations during installation (e.g. if a maximum permitted height is exceeded)
- verify violations on the reservation and use of containers, e.g. in relation to the maximum loads that can be placed inside the containers
- draw the group diagram on the user application in order to facilitate the booking and selection process.

### GPS localization

In an embodiment of the invention, the procedure for accessing container locations using GPS localisation is as follows:
- The application installed in the user's device (506-509, figure 1) detects whether the latter is approaching one or more groups of containers where goods are to be delivered/picked up by the latter; the distance used for the detection is previously set by the user.
- In the event of positive verification, the application proposes the list of groups. The user only has to confirm with a click on the name of the chosen group and the system sends the open command allowing the user immediate access to the location.

In an embodiment of the invention, the procedure for accessing containers using GPS localisation is as follows:
- The user application which has received access to the location from the system, or which has verified the user's approach to a group of containers, by means of a GPS signal, with reserved containers, proposes to the user the list of containers, where the user is to deposit or pick up goods.
- The user selects the container to be opened with a click, the application sends the request to the server. The server sends the open command.

### Special aspects of goods management

The activity of collecting and delivering goods involves four entities: the owners of the containers, the consignors, the couriers and the consignees.

The owner can be, according to some examples, any entity that decides to purchase and install one or more groups of containers to make them usable in an exclusive and/or reserved and/or public manner, benefiting from : costs of the containers such as to guarantee amortisation of the investment within the set timeframe, full freedom in the choice of containers to be purchased and in the method of assembly (being able to adapt them to the space available), simple and rapid installation (not requiring the intervention of specialised personnel), full freedom in defining access times and hourly rates of use, availability of opening kits to be installed on structures built directly by the owner (for example, the case of containers made of masonry walls, on whose opening door the opening kit is applied), availability of access control kits for the areas where the containers are housed.

The sender can be, according to one example, any entity that : uses containers located in its vicinity, even to the extent of having them, for example, at its home or place of work; uses the containers for any shipment (to any consignee, with any courier and/or automatic collection method); makes the booking of the containers for collection also within the shipper's management software platforms (think for example of the case of a web-based online sales site, the website software should be able to perform the booking of the containers also in automatic form without operator intervention) inserts the goods into the containers under secure conditions, therefore preferably in rooms or areas with controlled access; obtains proof from the system that the goods have been taken over; sets up automatic container selection filters, in order to make the choice of container quick or even fully automated via software; quickly accesses the inside of the containers; uses the containers to send and receive even perishable goods by setting and controlling the temperature inside the containers

The courier can be, according to one example, any entity that takes charge of the goods at the sender's premises and/or delivers them to the consignee without any time constraints (H24 and 7 days a week), so as to optimise the pick-up and delivery rounds; carries out the pick-up and/or delivery of the goods quickly and easily, thanks to easy and rapid access to the premises or areas where the containers are located, easy and rapid identification and opening of the container where the goods are to be picked up (without the need to retrieve and enter access codes, passwords and the like) performs the booking of the container for pick-up and/or delivery also as an integrated function within its own management platform; performs the pick-up and/or delivery always in conditions of security for both the operator and the goods, therefore preferably in premises or areas with controlled access; receives from the system proof of the goods' pick-up.

The consignee may be, for example, any entity that: has containers in its vicinity, up to, for example, having them at its home or place of business; uses the containers for any shipment (from any shipper, with any courier and/or automatic delivery method); the selection of the container in which to have the goods delivered may be made in at least one of the following ways : [1] the recipient identifies from time to time the container in which to have the goods delivered, [2] the recipient indicates to the system a list of groups of containers and/or containers in which to have the goods delivered, [3] the recipient indicates to the system one or more territorial areas within which to have the goods delivered, always within containers present in such areas, [4] the recipient indicates to the system either a list of groups of containers and/or containers in which to have the goods delivered (preferred choice) or one or more territorial areas within which to have the goods delivered, always within containers in those areas (in cases [2], [3] and [4] the actual reservation of the container may be advantageously entrusted by the consignee to the system or to the sender or courier in charge of delivery); picks up the goods from the container without time restrictions H24 and 7 days a week and under secure conditions, i.e. preferably in premises or areas with controlled access; receives proof from the system that the goods have been taken over; it can receive more than one consignment within the same container, preventing the person making the deposit from having access to the goods of previous consignments.

### Registration of a new shipment

In a particular realisation, the procedure for registering a new consignment sender-courier-consignee in the case of an online purchase takes place as described below. It is assumed that the online sales software platform has integrated the API made available by the system 500, so as to have access to the functionality of the system itself.

The purchaser, who has selected the items to be purchased, is asked how to organise shipment: whether by direct delivery to the recipient or by storage in a container 502. The purchaser, who has selected delivery by deposit in a 502 container, is asked whether he wishes to proceed with the booking or whether he would like to postpone it to a later date or entrust it to the shipper or courier (Note: the purchaser may prefer to postpone the booking if: the size of the goods cannot yet be determined or the delivery date cannot yet be determined).

If the buyer has decided to entrust the booking to the shipper or courier, the system sends the notification to the shipper or courier.

If the buyer has decided to make the booking, the platform receives via API the filters preset by the buyer and asks whether to confirm or change them. If the buyer asks to modify them for that shipment, the modification procedure is carried out before continuing with the steps below.

The system receives from the purchaser or from the online sales software platform the data of the goods to be shipped, number of packages, size and weight of each package, start date:
- The system selects the containers available and compatible with the goods, the requested datetime and the selection filters set and proposes a list of possible choices;
- the sender selects the containers from the proposed list.

In an example implementation, the procedure for registering a sender-courier-receiver shipment performed by the sender is as follows:
- The sender, who sets up a shipment, sends a request to System 500 to assign a code to that shipment. The sender also communicates an identification string for said consignment and the consignee's identifier. The 501 server, after due verification, sends a message confirming that the shipment request has been accepted.
- The system asks the sender whether collection from the sender is by container or by hand pick-up.
- If it is by container, the system proposes the selection filters preset by the sender and asks whether they should be changed for that shipment. If the sender asks to modify them, the modification procedure is started before proceeding to the next steps.
- The sender enters the data of the goods: number of packages, size and weight of each package and the storage date. Based on this data, the system makes the selection and proposes the list of compatible containers to the sender.
- The sender confirms to the system his choice of containers for storage.
- The system then asks the sender whether he also wishes to reserve the containers for delivery to the recipient:
   ▪ if the sender responds positively, the system proposes the list of available containers on the basis of the recipient's pre-set filters;
   ▪ the sender selects the containers.
- The sender finally selects the courier.
- If the sender has not selected containers for delivery to the recipient, the system sends a notification to the courier and the recipient.

In a specific realisation, the goods deposit by the sender takes place as follows:
- the sender goes to the place where the reserved containers are located. If the location is protected by an access device, the sender sends a request for access to the location to the central server via a device application;
- on receipt of the access request, the 501 central server verifies whether the sender has reserved in his name at least one container belonging to the goods storage group with a storage datetime prior to the datetime on which the access request is made, or consequently no later than a given interval set by the container group owner, e.g. 60 minutes. If the verification is successful, the central server sends the open command to the access device and proceeds to the next step. If the verification ascertains that the sender has a container reserved but the request is being made too early, the system sends the sender a denial message via the application because the request was made too early and informs about the waiting time required. If the check ascertains that the sender does not have a reserved container, the central server sends a message via application informing that access is denied because the container reservation is missing;

- the sender, after accessing the location of the reserved container group, requests the device application for the list of reserved containers with the storage ID. The application shows only those reserved containers that are compatible with the datetime, those that are not compatible are hidden or listed in a different colour and/or inserted at the end of the list. In the case of a group with self-recognition positioning, the application can also show the bookings by displaying a diagram of the group composition by writing the booking identifier in the container box. The sender selects the chosen containers and sends the opening request to the central server;
- the central server sends the open command to the selected containers and informs the sender via the application that the system is waiting for the containers to be closed;
- once the containers have been opened, the sender inserts the goods and closes the containers. The electromechanical lock on each door sends the message of successful closure to the central server;
- the central server sends a message to the sender's application that the containers have been successfully closed;
- the central server updates the table of pending pick-ups, which the courier can consult.

### Goods withdrawal

In an embodiment of the invention, goods pick-up by the courier takes place as follows:
- the courier accesses the list of shipments waiting to be picked up;
- the courier goes to the pick-up location;
- if the location is protected by an access device, the courier sends the central server a request for access to the location;

- the central server, upon receiving the access request, verifies whether the courier should pick up from a container belonging to the goods group. If the verification is positive, the central server sends the open command to the access device and moves on to the next point; if not, the central server sends a message informing that access is denied because the container reservation is missing and the procedure is exited;
- the courier selects the identifier of the consignment to be picked up. The central server sends the open command to all containers containing goods corresponding to the selected identifier and indicates that the system is waiting for the containers to be reclosed;
- the courier, having picked up the goods, reseals the containers;
- the electromagnetic locks of the reclosed containers send the system information that the containers have been reclosed;
- the system sends to the courier's application the information of successful reclosing.

In an embodiment of the invention, the delivery of goods by the courier takes place as follows:
- the courier takes charge of all deliveries to be made and obtains from the system the indications of the delivery containers booked for each shipment.
- the courier goes to a group of containers to make a delivery;
- if the location is protected by an access device, the courier sends a request for access to the location to the central server via the application;
- the central server, upon receipt of the access request, verifies whether the courier is to make a delivery to a container belonging to the group with a delivery datetime prior to the datetime at which the access request is made, or consequently no later than a certain interval set by the owner of the container group, e.g. 60 minutes. If the verification is successful, the central server sends the open command to the access device and proceeds to step 5. If the verification ascertains that the courier has a container reserved for delivery but the request is being made too far in advance, the system sends the courier a denial message via the application because the request was made too far in advance and informs about the waiting time required;
- the courier accesses the location and sends the request to the central server to open the containers for the selected delivery identifier;
- the central server sends the open containers command to the selected containers and informs the courier that the system is waiting for the containers to be closed;
- Once the containers have been opened, the courier inserts the goods and closes the containers again. The electromechanical lock on each door sends the message of successful closure to the central server;
- the central server sends a message to the courier's application that the containers have been correctly closed;
- the central server sends a message to the recipient that the goods are ready for collection.

In an embodiment of the invention, goods pick-up by the consignee occurs as follows
- the consignee, upon receiving the notification of goods storage, goes to the place where the containers are located;
- if the place is protected by an access device, the consignee sends a request to the central server for access to the place;
- the central server, upon receipt of the access request, verifies whether the consignee is to make a withdrawal from a container or containers belonging to the group. If the verification is positive, the central server sends the open command to the access device and proceeds to step 5. If the verification ascertains that the recipient does not have a container reserved for delivery, the system sends a denial message to the recipient via the application;
- the recipient accesses the location and on the device selects via the application the identifier of the delivery to be picked up. The application sends the opening request to the central server;
- the central server, having received the request, sends the open command to the containers concerned and sends a notification on the recipient's device that the containers are waiting to be closed;
- the sender removes the goods from the containers and closes the containers again;
- the containers send notification to the central server that they have been closed;
- the central server sends notification to the recipient that the container has been closed and that the picking procedure has ended.

### Legend of figure symbols

- keypad combiner 1
- magnetic and/or smart card reader 2
- wireless short distance reader 3
- indicator light 4
- opening handle 5
- first connector 9
- additional male connector 10
- additional female connector 11
- second connector 12
- side wall 15
- base wall 16
- door 17
- electrical conductors 22
- hinge 23
- notch of ferromagnetic material 25
- conductive reed 26
- sensor protection box 27
- thrust flap 28
- first electrical contact 30
- second electrical contact 31
- blocking flap 35
- housing body 36
- power supply device 49
- terminal 50
- further terminal 51
- second communication module 52
- router 53
- processing and storage module 56
- first communication module 57
- LAN socket 58
- GPS module 60
- upper compartment 69
- lower compartment 70
- movable partition 71
- guide 72
- notch 73
- pivot pin 74
- movable separator septum 75
- rollers 76
- magnetic hook 77
- magnetic lock 78
- guide 80
- fixing pin 81
- opposite end 82
- pulley 83
- additional toothed 84
- pivot pin 85
- locking element 86
- first shutter 87
- second shutter 88
- gate separator septum 93
- object 94
- lower end 95
- upper end 96
- steel cables 97
- guide specification 99
- door 108
- switch 112
- electromechanical lock 113
- router 114
- under stairs 115
- condominium 116
- cottage 117
- pharmacy 118
- warehouse 119
- supermarket 120
- data terminal 152
- management system 500
- management computer 501
- goods container 502
- container group 503
- communication and control device 504
- database 505
- device associated with seller 506
- device associated with sender 507
- receiver-associated device 508
- buyer-associated device 509
- first panel 510
- second panel 511
- handling device 512
- upper door 513
- lower door 514
- right-hand compartment 515
- left-hand compartment 516
- right door 517
- left door 518
- electromechanical lock 520
- lock block 521
- lock striker 522
- electrical earth cable 523
- electrical supply voltage cable 524
- data transmission cable 525
- first terminal 526
- second terminal 527
- third terminal 528
- first contact 529
- second contact 530
- third contact 531
- fourth terminal 532
- fourth contact 533
- connector body 534
- male connector 540
- female connector 541
- cable for self-configuration procedure 542
- access device 543
- courier-associated device 544
- communication device 545
- owner-associated device 546
- first cable C1
- second cable C2
- thermoelectric device 600
- plates 601 and 602
- heat sinks 603
- fan 604
- control chip 605
- temperature sensor 606

## Claims

1. A system (500) for managing the shipping and receiving of goods, comprising:
- a management computer (501) for managing activities relating to the shipping and receiving of goods;
- a first container (502) and a second container each defining a relative internal compartment and configured to allow insertion, storage and withdrawal of goods into/from the relative internal compartment;
a first communication device (545) internal to the first container (502) configured to communicate with the management computer (501);
a second communication device (545) internal to the second container and configured to communicate with the management computer (501);
electrical cables (C1; C2) arranged in said containers (502) and configured to provide data and power to the first and second communication devices (545);
**characterised in that** the first container (502) and the second container are respectively provided with a first connector (9; 540) and a second connector (11, 541) mechanically and electrically coupled to each other so as to mechanically attach the first container (502) to the second container and connect said electrical cables (C1, C2) to establish a connection for the electrical supply voltage and data transmission.

2. System (500) according to claim 1, wherein:
the first container (502) is provided with a third connector (10) connected to the electrical cables (C1, C2);
the system (500) further comprising:
at least a third container (502) configured to allow insertion, storage and withdrawal of goods into/from a respective internal compartment; said third container being provided with: a respective power and data transmission electrical cable (C1, C2), a third communication device (545) configured to communicate with the management computer (501) and connected to the respective electrical cable;
said third container also comprises:
a fourth connector (12) mechanically and electrically coupled to the third connector (10) in such a way that the first, second and third container are all electrically connected to each other for data transmission.

3. System (500) according to claim 2, wherein said communication devices (545) are configured to handle a serial type data transmission over said electrical cables.

4. System (500) according to claim 1, wherein:
the first connector (9, 540) associated with the first container is of the male type and comprises: a first terminal (526) connectable to a ground cable (523), a second terminal (527) connectable to a power voltage cable (524) and a third terminal (528) connectable to a data transmission cable (525);
the second connector (12, 541) associated with the second container is female and comprises: a first contact (529) configured to connect to the first terminal (526), a second contact (530) configured to connect to the second terminal (527) and a third contact (531) configured to connect to the third terminal (528).

5. System (500) according to claim 4, wherein:
the first connector (540) further comprises a fourth terminal (532) connectable to a further data transmission cable (542);
the second connector (541) further comprising a fourth contact (533) connectable to the fourth terminal (532).

6. System (500) according to claim 1, wherein: the first (540) and the second (541) connectors are provided with mechanical components (33, 35) of reversible mutual locking.

7. System (500) according to claim 1, wherein: at least the first container (502) comprises:
a separating septum (71; 75; 93) movable between a closing position in which it separates the internal compartment of the first container into a first compartment (69; 515) and a second compartment (70; 516), and an opening position in which it connects the first compartment (69; 515) with the second compartment (70; 516);
a movement device (512) of the separator septum (71; 75; 93) between the first and second positions configured to operate based on control signals provided by the communication device (545) and comprising a movement motor mechanically coupled to mechanically connected motion transmission organs to the movable separator septum (71; 75; 93).

8. System (500) according to claim 7, wherein:
the separating septum (71) is arranged according to a horizontal plane so that in the closed configuration the first compartment (69) is an upper compartment and the second compartment is a lower compartment (70);
or
the separating septum (75) is arranged in a vertical plane so that in the closed configuration the first compartment (515) is a right-hand compartment and the second compartment is a left-hand compartment (516) with respect to the separating septum (75).

9. System (500) according to claim 8, wherein the first compartment (502) further comprises:
- a first door (513; 517) configured to close the first compartment (69; 515) and access the first compartment so as to allow insertion or withdrawal of goods;
- a second door (514; 518) configured for closing the second compartment (70; 516) and access to the second compartment so as to allow insertion or withdrawal of goods.

10. System (500) according to claim 7, wherein the movable separating septum (71, 75) is a device selected from the group: folding panel, accordion panel, folding door, sliding shutter.

11. System (500) according to claim 9, wherein said first door (513; 517) or second door (514; 518) is a device selected from the group consisting of: single- or multi-leaf door, roller shutter, rolling shutter.

12. System (500) according to claim 1, wherein at least the first container (502) further comprises: a thermoelectric device (600) including a Peltier cell controllable by means of said communication device (545) for heating/cooling the inner compartment of the container (502).

13. System (500) according to claim 1, wherein at least the first container (502) is provided with:
a closing/opening device (17) for allowing or preventing access to said inner compartment of said first container (502).

14. System (500) according to claim 13, wherein at least the first container (502) comprises:
a hinge (23) mechanically connected to said closing/opening device (17) and such as to allow rotation between a closed position and an open position;
an electrical contact sensor (26, 30, 31) configured to generate an electrical signal receivable by said communication device (545) suitable to indicate the open or closed position of the closing/opening device (17); said sensor comprising a movable conductive element (26) suitable to open and close an electrical circuit;
a push element (28) associated with the hinge (23) so as to rotate with the hinge and act on said movable conductive element (26) to open and close the electrical circuit.

15. System (500) according to claim 1, according to at least one of the preceding claims wherein:
at least one of said containers (502) is arranged in an outdoor or indoor room/area (115, 116, 117, 118) provided with a further closing/opening device (543, 112, 11) to allow or prevent access to the room/area; said further closing device (543, 112, 11) being provided with an access device (113) controllable by the management device (501) to assume an opening configuration in which it allows the closing/opening device to be opened and a closed position in which it keeps the closing/opening device closed.
